# EUROPEAN PATENT SPECIFICATION

(11) **EP 4 673 501 B1**
(45) Date of publication and mention of the grant of the patent: **11.02.2026**
(21) Application number: 24727705.6
(22) Date of filing: 16.05.2024
(51) Int. Cl.: C08K 5/548, C08L 9/00, B60C 1/00

(54) **CONDUCTIVE ADDITIVE TO SILICA-FILLED RUBBER COMPOSITION AND METHOD OF ITS PRODUCTION**
LEITFÄHIGES ADDITIV FÜR SILICA-GEFÜLLTE KAUTSCHUKZUSAMMENSETZUNG UND VERFAHREN ZU SEINER HERSTELLUNG
ADDITIF CONDUCTEUR POUR COMPOSITION EN CAOUTCHOUC REMPLIE DE SILICE ET SON PROCÉDÉ DE PRODUCTION

(30) Priority: 07.06.2023 LU 504442
(43) Date of publication of application: 07.01.2026
(73) Proprietor: MCD Technologies S.a.r.l, 3364 Leudelange (LU)
(72) Inventor: PREDTECHENSKIY, Mikhail Rudolfovich, 7214 Bereldange (LU); KHASIN, Alexander, 1281 Luxembourg (LU); KOROTICH, Mikhail, 4636 Differdange (LU); HELT, Jean-Nicolas, 54260 Viviers-sur-Chiers (FR); GORBUNOVA, Ekaterina, 11000 Belgrade (RS); KARPUNIN, Ruslan, 11080 Belgrade (RS); JANSSEN, Hendrik, 3937 Mondercange (LU)
(74) Representative: Dennemeyer & Associates S.A.
(86) International application number: PCT/EP2024/063615
(87) International publication number: WO 2024/251493

(56) References cited:
- EP-A1- 3 825 147
- CN-A- 110 951 257
- US-A1- 2018 171 115
- US-A1- 2018 362 725

## Description

### Background of the invention

### Field of the invention

The present invention relates to additives that increase the electrical conductivity and improve physical and mechanical properties of silica-filled rubber vulcanizates. In addition, the invention relates to a process for the preparation of the additive.

### Conventional art

To improve the complex of mechanical properties of rubber, facilitate the processing of the rubber mixture, as well as reduce the cost of rubber products, special materials are used - fillers. Historically, the first filler widely used in rubber industry was carbon black. Along with carbon black, silicon dioxide (silica) is becoming more widespread. Silicon dioxide has several advantages over carbon black. In carcass and belt rubbers better adhesion (i. e. to the metal cord) is achieved due to the introduction of silica. Silicon dioxide allows to increase the level of dynamic endurance, resistance to mechanical damage and bond strength with the carcass for sidewall rubbers. As for the tread, silicon dioxide contributes to maintaining high elasticity at low temperatures, enhancing grip on wet and icy roads, as well as reducing rolling resistance, that is, reducing vehicle fuel consumption.

In addition to the benefits in tire performance, the use of silicon dioxide as a filler is more environmentally friendly for several reasons. First, the production of carbon black is associated with air pollution by combustion products. Secondly, as a result of the natural wear of tires and rubber products (RTI), the smallest particles of soot enter the atmosphere, which are a significant threat to the health of others. And finally, the very reduction of rolling resistance will lead to lower fuel consumption, which is not only more economical, but also more environmentally friendly.

However, with all the advantages of silicon dioxide, its use as a primary rubber filler encounters a few limitations. This filler can be extremely difficult to disperse in rubber compounds. The surface of silica particles is highly saturated with polar silanol (SiOH) and siloxane (SiOSi) groups. Due to their high polarity, silica particles have less affinity for non-polar rubbers and are more likely to interact with each other. Thus, with an equal specific surface area, silicon dioxide particles have a smaller reinforcing effect compared to carbon black.

In addition, silicon dioxide, unlike carbon black, is not electrically conductive and therefore cannot impart electrical conductivity to the rubber composition. Rubbers filled solely with silicon dioxide are dielectrics, which, for example in the case of tires, can lead to the accumulation of static electricity at the vehicle. There are several international standards applicable to vehicle tires and covering the electrical properties of tires (International Standard ISO 16392:2017 Tires - Electrical Resistance - Test Method for Measuring Electrical Resistance of Tires on a Test Rig, ASTM F 1971-12(2018) Standard Test Method for Electrical Resistance of Tires Under Load On the Test Bench, etc.). These requirements define and provide protection against static electricity due to the dissipation of the static electricity charge, which is continuously accumulating as the tire is operated, and the prevention of accumulation of the charge long-term. Depending on the application, the tires are classified into two categories: anti-static tires that can safely dissipate the electrical charge if their measured resistance does not exceed 10¹⁰ Ohm, and conductive tires, if their measured resistance does not exceed 10⁶ Ohm.

In this regard, electrically conductive additives, such as carbon black or nanocarbon fillers, must be added to the rubber composition. Nanocarbon fillers are preferable over carbon black, since a much smaller amount of filler is required to provide the required level of electrical conductivity, which has a positive effect on the combination of rubber properties. However, the dispersion of nanocarbon fillers, especially single-walled and double-walled carbon nanotubes, which tend to form strong bundles, is a technical challenge. The solution to this problem is proposed in several patents. Known, for example, is a method for producing a masterbatch containing carbon nanotubes in liquid rubber according to the invention [EP 2607407 B1] by dispersing in a three-roll mill. The method according to the cited invention makes it possible to achieve a small size of carbon nanotube agglomerates in the masterbatch with a dispersion of 5 to 50 wt % carbon nanotubes in a dispersion medium containing liquid rubber with an average molar mass, MW, from 500 g/mol to 200 kg/mol (preferably from 500 g/mol to 100 kg/mol, most preferably from 500 g/mol up to 20 kg/mol).

Application [WO 2022186728] proposes to increase the electrical conductivity and physical and mechanical properties of rubber using an additive containing carbon nanotubes, characterized in that it contains from 1 to 20 wt % carbon nanotubes, from 3 to 90 wt % high-viscosity organic rubber and from 8 to 95 wt % low molecular weight organic dispersion medium capable of dissolving high-viscosity organic rubber and selected from the group: mineral petroleum oil with a flash point above 200 °C and kinematic viscosity at 100 °C less than 1 St or a polar solvent with a dielectric constant at 25 °C of more than 5 or one or more esters of aliphatic alcohols with acids from the group: phthalic acid, terephthalic acid, sebacic acid, adipic acid, or cyclohexanedicarboxylic acid.

A common disadvantage of those inventions is the introduction of a significant amount of low-molecular-weight dispersion medium or rubber oligomer (liquid rubber) into the rubber composition, which can affect the properties of rubber. In formulations containing an appropriate low molecular weight dispersion medium plasticizer (e.g., TDAE oil), the addition of this plasticizer with an additive can be compensated by reducing the content of the plasticizer added directly to rubber composition. However, many formulations lack a suitable plasticizer and adding such a plasticizer with the additive is highly undesirable.

Thus, remains relevant the technical problem of imparting electrical conductivity to rubber compositions reinforced with carbon nanotubes, while maintaining or improving the physical and mechanical properties.

### Description of the invention.

The invention provides an additive to silica-filled rubber composition comprising 1-20 wt % carbon nanotubes, 20-90 wt % of organosilane composition (S), and 5-70 wt % of organic rubber (R) soluble in organosilane composition (S).

The technical result of the provided disclosure is decreasing electrical volume resistivity and simultaneously improving physical-mechanical properties of rubber, including elastic moduli as determined by standard ISO 37:2017 (Rubber, vulcanized or thermoplastic - Determination of tensile stress-strain properties), tear strength as determined by standard ISO 34-1:2022 (Rubber, vulcanized or thermoplastic - Determination of tear strength - Part 1: Trouser, angle and crescent test pieces), hardness as determined by standard ISO 48-4:2018 (Rubber, vulcanized or thermoplastic - Determination of hardness - Part 4: Indentation hardness by durometer method (Shore hardness)) and others. Further technical results of the provided disclosure, which are manifested at least in some of its embodiments are increase in the resistance of rubber to abrasive wear and improvement in the dynamic characteristics of rubber. A further important technical result of the provided disclosure is simplicity of the rubber mixing process and the possibility of industrial application of the provided methods in the standard technologies by substitution of a liquid organosilane coupling agent by a viscous paste-like additive provided by this invention.

Each of the three components of the additive (carbon nanotubes, organosilane composition and organic rubber) is essentially important for achieving the technical result. However other components may also be present in the composition of the additive. In addition to carbon nanotubes, organosilane composition and organic rubber, the additive according to the present invention may contain, for example, particles of one or more metals of Groups 8-11 of the Periodic Table, for example, iron, cobalt, nickel, ruthenium, rhodium, palladium, iridium, platinum, copper, silver, gold or their alloys, not limited to the listed examples. Metal particles can be added to the additive along with carbon nanotubes as impurities due to the method of preparation of carbon nanotubes. Metal particles or other components may be specifically added to the additive to modify one or more properties of the rubber composition.

Carbon nanotubes impart electrical conductivity to rubber composition. The additive contains from 1 to 20 wt % of carbon nanotubes, preferably from 3 to 15 wt % of carbon nanotubes, most preferably from 5 to 10 wt % of carbon nanotubes. Carbon nanotubes are cylindrical carbon nanostructures with a diameter of 0.42 nm to 50 nm, consisting of one or more carbon (graphene) layers. In the additive of the present invention single-walled carbon nanotubes (SWCNTs) and/or double-walled carbon nanotubes (DWCNTs) and/or multi-walled carbon nanotubes (MWCNTs) may be used. SWCNTs and/or DWCNTs may be open-ended or close-ended, both may be used in the present invention. The surface of the carbon nanotubes may be modified by functional groups, such as carboxyl, or hydroxyl, or organic groups, for example, containing one or more amino groups and/or sulfoxy groups and/or epoxy groups and/or peroxy groups and/or other groups, not limited to the above examples. Heteroatoms, for example, nitrogen atoms or others, may be present in the structure of carbon nanotubes.

Electronic structure of SWCNTs or DWCNTs may be doped by adsorbing substances with donor or acceptor properties. Upon adsorption of such substances electrical charge is transferred from the donor molecule to the nanotube, or from the nanotube to the acceptor molecule, in other words, SWCNTs are, as a result, *n*-type or *p*-type doped, respectively. When a charge is transferred from SWCNTs to an electron acceptor molecule (*p*-dopant), the bonding levels are depleted of electrons to a certain energy, while the Fermi energy of semiconductor SWCNTs is shifted to the valence band region. Similarly, when a charge is transferred from a donor molecule (n-dopant), the antibonding levels that are above the initial Fermi level are enriched with electrons, so the Fermi energy of semiconductor SWCNTs shifts above the band gap. In both cases, doping of semiconductor SWCNTs leads to the appearance of metallic electrical conductivity in them. In the ideal case, the concentration of electrically conductive SWCNTs can increase by a factor of 3. Accordingly, far from the percolation threshold, the electrical conductivity of a three-dimensional network of doped SWCNTs will exceed the electrical conductivity of a similar network of undoped nanotubes by a factor of 9. However, the greatest gain in electrical conductivity is achieved just near the percolation threshold, since the effective percolation threshold for a network of doped SWCNTs can be 3 times lower than for undoped ones, then the electrical conductivity of a composite material using doped SWCNTs as an electrically conductive additive can be several orders of magnitude higher than when using undoped SWCNTs at the same concentration. *n*-Doped or *p*-doped SWCNTs and/or DWCNTs may be prepared by any of the methods known in the literature, for example n-doped SWCNTs may be prepared by moderate reduction of nanotubes by a mixture of salts with cation-coordinating solvent (e.g. crown ether or PEG), see [Y. Nonoguchi, M. Nakano, T. Murayama, H. Hagino, S. Hama, K. Miyazaki, R. Matsubara, M. Nakamura, T. Kawai, "Simple Salt-Coordinated n-Type Nanocarbon Materials Stable in Air." Advanced Functional Materials, Vol. 26, No. 18, (2016), pp. 3021-3028. doi:10.1002/adfm.201600179], or by any other method not limiting to the described example.

SWCNTs and/or DWCNTs with a diameter greater than 0,7 nm and less than 6 nm are preferred. It is more preferred that SWCNTs and/or DWCNTs have diameters greater than 1,2 nm and less than 3 nm. However, it is not obligatory that all nanotubes in the additive have diameters in this range.

It is known that SWCNTs and DWCNTs can combine into bundles due to the van-der-Waals forces (π- π interaction). During the agglomeration of nanotubes into bundles, not only the diameter of the bundle increases, but also its length, and the ratio of the length/diameter of the bundle increases with an increase in the number of nanotubes combined into a bundle. At the same time, it is known that the percolation threshold value (i.e. the lowest concentration of the conductive filler, which provides the existence of a continuous conductive network) is smaller when the aspect ratio (i.e. length:diameter ratio) of the particles of the conductive filler is larger. In this regard, in order to achieve a lower percolation threshold, it is desirable that the number of nanotubes in the bundle, and, consequently, the diameters of the nanotube bundles in the final rubber composition, be as large as possible, for example, more than 300 nm, preferably more than 1 µm, preferably more than 3 µm.

On the other hand, in order to ensure the uniformity of the material, preserve its physical and mechanical properties (including strength and wear resistance) and reduce the contact resistance of the material, it is desirable also to have many thin bundles of nanotubes in the material. Therefore, an additive in which the nanotubes are combined into bundles is preferably characterized by a wide bundle diameter distribution, e.g., from 20 nm to 500 nm or, preferably, from 10 nm to 2 µm or, preferably, from 3 nm to 10 µm.

MWCNTs usually combine into entangled agglomerates but are not able to form bundles. The presence of entangled agglomerates of nanotubes in the material is undesirable. In this regard, it is preferred that at least 25 wt % of carbon nanotubes in the additive are SWCNT and/or DWCNT, most preferably at least 50 % by weight of the carbon nanotubes in the additive are SWCNT.

A characteristic feature of SWCNT, which distinguish them from other allotropic modifications of carbon, is the high intensity of the G line with a maximum in the region of about 1580 cm⁻¹ compared to the D line in the region of 1330 cm⁻¹ in the Raman spectrum. In this regard, the higher the ratio of the intensity of G/D lines in the Raman spectrum, the better. It is preferred that the carbon nanotubes in the additive are characterized by the ratio of the intensities of G/D lines in the Raman spectrum at 532 nm more than 10. It is more preferable that the carbon nanotubes in the additive are characterized by the ratio of the intensity of G/D lines in the Raman spectrum at 532 nm more than 40. Most preferably, the carbon nanotubes in its composition are characterized by the ratio of the intensity of the G/D lines in the Raman spectrum of 532 nm more than 60. However, it should be noted that in some applications the technical result can be achieved even with a low content of SWCNT in the additive and, accordingly, with a low ratio of intensity of G/D lines.

Organosilane composition interacts with silicon dioxide filler during mixing rubber and with non-saturated C=C bonds of rubber polymer, ensuring coupling of silica particles and rubber. Adding organosilane within the additive according to the invention together with carbon nanotubes dispersed in the additive gives additional benefits related to
(1) more homogeneously distributing organosilane coupling agent in the rubber compound; carbon nanotubes act as a supporting carrier with high surface area, which develops interphase boundary and accelerate mass transfer processes;
and (2) providing the direct interaction between primary filler (silica) and secondary filler with high aspect ratio (carbon nanotubes).

These synergistic effects manifest themselves in improved physico-mechanical properties of rubber; meanwhile no such synergy can be found if organosilane and carbon nanotubes were introduced to rubber composition independently, e. g. at different stages, and were not well mixed and dispersed before loading to internal rubber mixer.

It is therefore essential that the additive contains from 20 to 90 wt % of organosilane composition, preferably from 40 to 85 wt % of organosilane composition, most preferably from 60 to 80 wt % of organosilane composition (S). For attaining the targets of the invention organosilane composition may be any composition known from the existing patent or scientific literature as an organosilane coupling agent for silica-filled rubbers. The choice of the organosilane coupling agent should preferably be made considering the formulation of the final rubber compound where the additive is added. For many embodiments it is preferable that the organosilane composition contains one or more sulfur-containing organosilane coupling agents. Among the known organosilanes, which can be used in the organosilane composition in the additive, are acylthioalkyl silanes, for example HOC(=O)CH₂CH₂C(=O)S(CH₂)₃Si(OC₂H₅)₃, described by R. Bell et al. in [US 3922436A, 13.09.1974, IPC: B32B17/04, B32B17/06, C03C25/24, C03C25/40, C07F7/00, C07F7/18, C08J5/08, C08J5/04, C08K5/00, C08K5/54], or CH₂=C(CH₃)C(=O)S(CH₂)₁₋₆Si(OCH₃)₃, described by Takeshita and Sugawara in [JPS 63270751A, 8.11.1988, C08L 9/00, C08K 3/04, C08K 3/36, C08K 5/54, C08L 23/22], or blocked mercaptosilanes G-C(=O)-S-CH₂CH₂CH₂SiX₃ wherein each X is an independently selected -OR group and G is a monovalent alkyl of 6 to 8 carbon atoms described in [US 6608125 B2; 09.11.2001; C07F 7/18, C08J 5/08, C08K 5/54], or any of organosilanes described in [US 7919650 B2; 21.02.2006; C07C 321/00], or any other known from the state-of-the-art as a organosilane coupling agent for silica-filled rubbers not limiting to the given examples.

Exact amount of carbon atoms in the alkyl or alkylene groups in the organosilane may affect many important properties of organosilane, like its viscosity, melting temperature and others. The organosilane composition (S) may comprise an alkyl silane and/or one or more of sulfur-containing organosilanes: acylthioalkylsilane, mercaptosilane, disulfide silane, or polysulfide silane. The suitable acylthioalkylsilane, or mercaptosilane, or disulfide, or polysulfide silane may contain alkyl and alkenyl groups of any reasonable length, for example with the amount of carbon atoms in each group from 1 to 18. Also, these alkenyl groups may be linear or branched.

For some embodiments the organosilane composition (S) may comprise one or more compounds which have structural formula (1)

X¹X²X³Si-R⁴ (1)

wherein R⁴ is a linear or branched alkyl group of from 1 to 18 carbon atoms; X¹ is an -OR² group, where R² is an alkyl group of from 1 to 4 carbon atoms, or X¹ is an -OR³OH group, where R³ is a linear or branched alkylene group of from 2 to 8 carbon atoms; each occurrence of X² and X³ is independently X¹ or methyl, and when X¹ and X² are -OR², then the two -OR² may be bonded together through a covalent bond to form a -OR²-R²O- group bonded to the same silicon atom which forms a ring structure containing 2 to 8 carbon atoms, two oxygen atoms and a silicon atom.

For some embodiments, the organosilane composition (S) may comprise one or more disulfide or polysulfide compounds, which have structural formula (2)

X¹X²X³Si-R¹-S*ₐ*-R¹-SiX¹X²x³ (2)

wherein R¹ is a linear or branched alkylene group of from 1 to 6 carbon atoms; X¹ is an -OR² group, where R² is an alkyl group of from 1 to 4 carbon atoms, or X¹ is an -OR³OH group, where R³ is a linear or branched alkylene group of from 2 to 8 carbon atoms; each occurrence of X² and X³ is independently X¹ or methyl and when X¹ and X² are -OR², then the two -OR² may be bonded together through a covalent bond to form a -OR²-R²O- group bonded to the same silicon atom which forms a ring structure containing 2 to 8 carbon atoms, two oxygen atoms and a silicon atom; and *a* is an integer from 2 to 8.

For some embodiments, R¹ in formula (2) may be -C₃H₆-. For some embodiments X¹ in formula (2) may be -OC₂H₅. In particular, the organosilane composition may comprise a mixture of bis(triethoxysilylpropyl)polysulfides. Such a mixture is usually referred as Si69 silane coupling agent.

For some other embodiments the organosilane composition (S) may comprise one or more compounds which have structural formula (3)

X¹X²X³Si-R¹-S-H (3)

wherein R¹ is a linear or branched alkylene group of from 1 to 6 carbon atoms; X¹ is an - OR² group, where R² is an alkyl group of from 1 to 4 carbon atoms, or X¹ is an -OR³OH group, where R³ is a linear or branched alkylene group of from 2 to 8 carbon atoms or X¹ is an - OR⁶(OR⁷)*_{c}*OR⁸, wherein R⁶ is a straight chain alkylene group of from 2 to 6 carbon atoms or a branched chain alkylene group of from 3 to 6 carbon atoms, each R⁷ is independently an alkylene group of from 2 to 4 carbon atoms and R⁸ is a straight chain alkyl group of from 1 to 16 carbon atoms or a branched chain alkyl group of from 3 to 16 carbon atoms and c is an integer from 1 to 20; each occurrence of X² and X³ is independently X¹ or methyl, and when X¹ and X² are -OR², then the two -OR² may be bonded together through a covalent bond to form a -OR²-R²O- group bonded to the same silicon atom which forms a ring structure containing 2 to 8 carbon atoms, two oxygen atoms and a silicon atom.

For some other embodiments organosilane composition (S) may comprise one or more compounds which have structural formula (4)

X¹X²X³Si-R¹-S-C(=O)-R⁴ (4),

wherein R¹ is a linear or branched alkylene group of from 1 to 6 carbon atoms; X¹ is an -OR² group, where R² is an alkyl group of from 1 to 4 carbon atoms, or X¹ is an -OR³OH group, where R³ is a linear or branched alkylene group of from 2 to 8 carbon atoms; each occurrence of X² and X³ is independently X¹ or methyl and when X¹ and X² are -OR², then the two -OR² may be bonded together through a covalent bond to form a -OR²-R²O- group bonded to the same silicon atom which forms a ring structure containing 2 to 8 carbon atoms, two oxygen atoms and a silicon atom; and R⁴ is a linear or branched alkyl group of from 1 to 18 carbon atoms.

For some embodiments, R¹ in formula (4) may be -C₃H₆-. For some embodiments R⁴ in formula (4) may be -C₇H₁₄. More specifically, organosilane composition may comprise 3-octanoylthio-1-propyltriethoxysilane (X¹, X², and X³ are -OC₂H₅; R¹ is -C₃H₆-, and R⁹ is -C₇H₁₄), also known as Momentive NXT^{™}.

For some embodiments it is preferrable that organosilane composition (S) comprises oligomer of acylthioalkyl silanes and/or mercaptoalkyl silanes having formula (5)

X¹Silyl¹-O-{R⁵-O-Silyl²-}*_{b}*X¹, (5)
wherein Silyl¹ and each occurrence of Silyl² is independently one of bivalent silyls: mercaptoalkylsilyl X²Si-(R¹-SH) or acylthioalkylsilyl X²Si-R¹-S-C(=O)-R⁴; where each occurrence of R¹ is independently a linear or a branched alkylene group of from 1 to 6 carbon atoms;
X¹ and each occurrence of X² are independently an -OR² group, where each occurrence of R² is independently an alkyl group of from 1 to 4 carbon atoms or an -OR³OH group, where each occurrence of R³ is independently a linear or branched alkylene group of from 2 to 8 carbon atom and when X¹ and X² are -OR², then the two -OR² may be bonded together through a covalent bond to form a -OR²-R²O- group bonded to the same silicon atom which forms a ring structure containing 2 to 8 carbon atoms, two oxygen atoms and a silicon atom;
each occurrence of R⁴ is independently a linear or branched alkyl group of from 1 to 18 carbon atoms;
each occurrence of R⁵ is independently a linear or branched alkylene group of from 1 to 18 carbon atoms;
and b is an integer from 1 to 8.

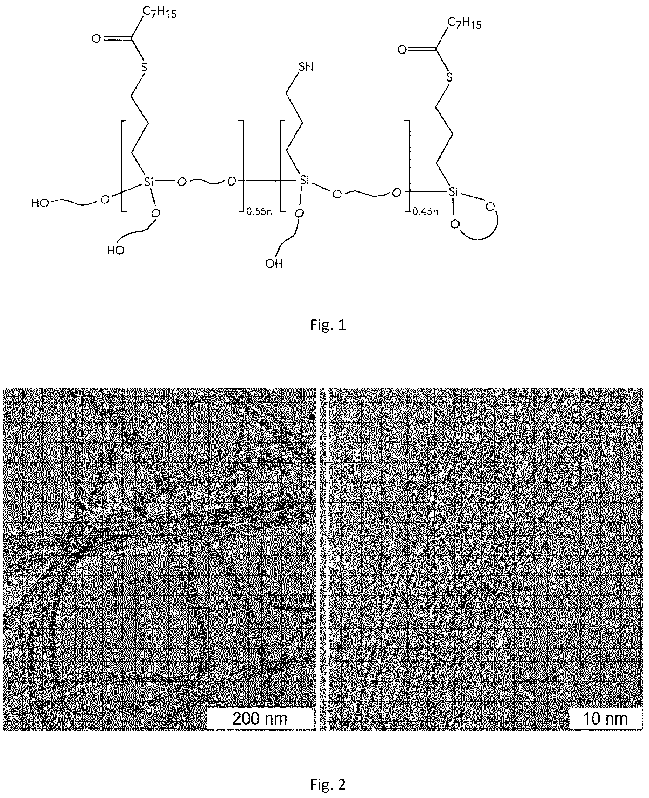

For some embodiments it may be preferable that organosilane composition comprises the mixture of oligomers which follow structure formula (4) where R¹ is -C₃H₆-; each occurrence of R⁴ is -C₇H₁₅; and *b* = 2 and Silil² is 45 mol % mercaptosylil HOR³O-Si-C₃H₆-SH and 55 mol % acylthioalkylsilyl HOR³O-Si-C₃H₆-S-C(=O)-C₇H₁₅. Such a mercapto-thiocarboxylate silane oligomer composition is known as Momentive NXT Z 45^{™}. The structural representation of the formula for Momentive NXT Z 45^{™} silane is shown by FIG 1.

The third essential component of the additive is organic rubber. The additive contains from 5 to 70 wt % of organic rubber, preferably from 10 to 60 wt % of organic rubber, most preferably from 15 to 25 wt % of organic rubber (R). Rubber plays several roles in the additive: (1) during additive preparation process it serves as a surfactant, which adsorbs at the surface of carbon nanotube and prevents re-agglomeration of carbon nanotubes, thus increasing extent of their dispersion; (2) during additive usage (rubber compounding) it prevents segregation of organosilane to a separate phase in rubber compound during mixing the additive and rubber compound, thus ensuring better distribution of organosilane in rubber compound; (3) during further rubber curing (vulcanization) it reacts with sulfur-containing groups of organosilane molecules, thus ensuring effective coupling of silicon dioxide filler with carbon nanotubes.

Organic rubber (R) may include synthetic or natural, saturated or unsaturated rubbers. It is preferred that Mooney viscosity ML₍₁₊₄₎ at 100 °C of the rubber is not less than 20 MU. The mass-averaged molar mass, Mw, of such rubbers can be as high as 1000 kg/mol (1 million Daltons) and more. In the additive, one may use for example one of natural rubbers or synthetic isoprene rubbers, styrene-butadiene rubbers, poly-(styrene-butadiene-styrene) block copolymers, nitrile butadiene rubbers, hydrogenated nitrile butadiene rubbers, butadiene rubbers, butyl rubbers, halobutyl rubbers, ethylene-propylene rubbers, ethylene-propylene-diene rubbers (including those with hexadiene or dicyclopentadiene as a diene monomer), propylene oxide rubbers, acrylate rubbers, carboxylate rubbers, chloroprene rubbers, fluororubbers, polysulfide rubbers, epichlorohydrin rubbers, urethane rubbers, chlorosulfonated rubbers, or combinations thereof not limiting to these examples.

Most preferable is that rubber contains unsaturated C=C bonds, it is also preferable that it contains aromatic groups, it is most preferable that it contains both unsaturated C=C bonds and aromatic groups. For example, it is preferable that the rubber is styrene-butadiene rubber (SBR) or poly-styrene-butadiene-styrene block copolymer (SBS rubber) or their mixtures.

For some embodiments of the invention, it is preferred that oil-extended rubber is used, that is, synthetic rubber, in which organic plasticizers (oils) are added at one of the stages of production. For some other embodiments it may be preferrable that functionalized rubber is used in the additive.

The invention further provides the method to produce the additive comprising the sequence of stages: (1) dissolution of organic rubber (R) in organosilane composition (S) and (2) dispersing carbon nanotubes in the solution obtained at stage (1).

These stages can be both separated in time and performed on different equipment, or they can be performed consequently one after another using the same equipment, for example, in an internal rubber mixer. Dispersing carbon nanotubes in a solution of organic rubber in organosilane composition may be performed by any method known and used in the state-of -the-art to disperse and homogenize a paste, including ball mills, planetary mills, twin screw homogenizers, rotor-stator homogenizers, three-roll mills, roll mills with 4 rolls or more, internal rubber mixers with various rotor geometries, rubber processing 2 roll mills, not limited to the types provided by these examples.

The method may further include a stage of wetting and premixing of carbon nanotubes in an organosilane composition (S) or in one of the components of the organosilane composition (S) or in a solution of rubber (R) in the organosilane composition (S), such as prior to our during stage (1). However, since carbon nanotubes are a low bulk density powder, potentially hazardous to personnel and equipment, it is preferable that between stage (1) and the dispersion stage (2), the method to produce the additive additionally includes the stage of wetting and premixing of carbon nanotubes in an organosilane composition (S) or in one of the components of the organosilane composition (S) or in a solution of rubber (R) in the organosilane composition (S). In some cases, it is preferable to preheat the solution of rubber in organosilane composition to 50-120 °C before wetting the carbon nanotubes. Wetting may be carried out until the mass is visually homogeneous, i.e., until there are no lumps of dry carbon nanotubes, but this procedure does not play a decisive role.

After the mixing and dispersing, the ready-to-use additive is a black viscous paste. Two simple measurements may be used to fast check the quality of mixing and dispersing, these are the measurement of volume resistivity of the additive and measurement of its viscosity. From our experience, it is preferred that the additive has volume resistivity of less than 10 Ohm·m at 25 °C. It is most preferred that it has volume resistivity of less than 2 Ohm·m at 25 °C. Volume resistivity is understood here as the resistivity measured according to the standard ASTM D991-89(2020).

It is also preferred that Mooney viscosity ML₍₁₊₄₎ at 30 °C of the additive is not less than 5 MU and not more than 70 MU. It is most preferred that Mooney viscosity ML₍₁₊₄₎ at 30 °C of the additive is not less than 5 MU and not more than 20 MU. Mooney viscosity is understood here as the viscosity measured according to the standard ISO 289-1(2015). "(1+4)" subscript means 1 minute preheating of the sample to 30 °C and then carrying out the test for 4 minutes at 30 ± 0.5 °C

Additional features and advantages of the invention will be set forth in the description that follows, and in part will be apparent from the description, or may be learned by practice of the invention. The advantages of the invention will be realized and attained by the structure particularly pointed out in the written description and claims hereof as well as the appended drawings.

It is to be understood that both the foregoing general description and the following detailed description are exemplary and explanatory and are intended to provide further explanation of the invention as claimed.

### Brief Description of the Attached Drawings

The accompanying drawings, which are included to provide a further understanding of the invention and are incorporated in and constitute a part of this specification, illustrate embodiments of the invention and, together with the description, serve to explain the principles of the invention.
FIG 1 shows structural formula for organosilane composition Momentive NXT Z45^{™} used in Examples 5 and 11.
FIG 2 shows transmission electron micrographs (TEM) of SWCNTs TUBALL^{™}, used in Examples 1, 5, 10-11, 13-14, and 16-17.
FIG 3 shows Raman spectrum at 532 nm of SWCNTs TUBALL^{™}, used in Examples 1, 5, 10-11, 13-14, and 16-17.
FIG 4 shows transmission electron micrographs (TEM) of the mixture of SWCNTs and DWCNTs, used in the Example 3.
FIG 5 shows transmission electron micrographs (TEM) of the mixture of SWCNTs and DWCNTs, used in the Examples 4 and 5.
FIG 6 shows transmission electron micrographs (TEM) of purified open-ended SWCNTs TUBALL^{™}, used in the Example 12.
FIG 7 shows Raman spectrum at 532 nm of purified open-ended SWCNTs TUBALL^{™}, used in the Example 12.

### Detailed Description of Embodiments of the Invention.

Reference will now be made in detail to the preferred embodiments of the present invention, examples of which are illustrated in the accompanying drawings. For convenience, the information on the provided examples is also provided in the Tables 1-5 below.
Table 1 summarizes the composition and some of the properties of the additives according to the Examples 1-17.
Table 2 presents the formulation of the rubber composition, which was used for testing the ability of the additive to improve the properties of rubber.
Table 3 presents the mixing procedure of the rubber reference samples of comparative Example 0.
Table 4 presents the mixing procedure of the rubber composition with the inventive additives of Examples 1-17.
Table 5 summarizes the electrical conductivity and mechanical strength properties of vulcanized SBR/BR rubber prepared according to Tables 2-4, which were mixed using the additives according to the Examples 1-17. Here 1g(Rᵥ) is the decimal logarithm of volume resistivity in Ohm·m; 1g(Rₛ) is the decimal logarithm of sheet resistivity (Ohm/square) of a 2 mm sheet; M100 and M300 are moduli at 100 % and at 300 % elongation (MPa); TS is ultimate tensile strength (MPa), EB is the ultimate elongation in break (%); CT is the crescent tear strength (N/mm); H is hardness (Shore A units); RR is rebound resilience (%).

In the foregoing Examples viscosity of raw compounds was measured according to ISO 289-1:2015 by Viscometer Prescott Mooney-Line; measurement of volume electrical resistivity according to ASTM D991 of vulcanized samples was carried out using the DC power supply HY 5003D, voltmeter MNIPI B7-72, and Multimeter AKTAKOM AMM-1139; sheet resistivity measurement was performed by two-point method by SIMCO ST-4; tensile properties and crescent tear strength were measured according to ISO 27:2017 and ISO 34-1:2022 using Shimadzu AGS-5kN; hardness was measured according to ISO 48-4:2018 by Zwick 3130 digital hardness tester to Shore A; rebound resilience was tested according to ISO 4662:2017 by rebound resilience tester Zwick 5109.

Rubber mixing was performed using laboratory internal rubber mixer Brabender 350S with 390 ml mixing chamber and tangential rotors configuration and two roll rubber mill LM 200/400 Zamak Mercator with roll diameter - 200 mm, length - 400 mm using friction factor 1:1.2.

### Examples

### Example 0 (reference comparative samples)

Two SBR/BR rubber compounds were mixed by a 3 stage procedure as described in Tables 2 and 3 with Si69 a commercially available polysulfide silane from Evonik. as silane coupling agent and with Momentive NXT as silane coupling agent. Rubber sheets of 2 mm thickness were cured and volume resistivity, sheet resistivity, mechanical tensile properties, crescent tear strength, hardness and rebound resilience were measured. The results are summarized in Table 5 as Examples 0-Si69 and 0-NXT. Rubber is non-conductive with volume electrical resistivity above the measuring range and sheet resistivity of 10¹³ Ohm/square. Mechanical properties of cured rubbers are used as a benchmark for the evaluation of the additives in the Examples below.

### Example 1

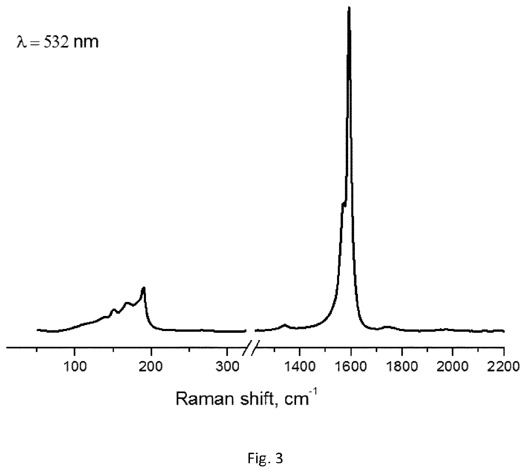

The additive comprises 10.0 wt % single-walled carbon nanotubes TUBALL^{™}, 75.0 wt % of Si69 silane coupling agent and 15 wt % of SBR rubber. SWCNT TUBALL^{™} used in this example have purity of 87 %, they have mean diameter of 1.6 nm and length over 5 micrometers. TEM micrographs are shown in FIG 2, Raman spectrum at the wavelength of 532 nm is shown in FIG 3. The ratio of G/D bands is 91. The SWCNT are close-ended and have BET specific surface area 520 m²/g SWCNT TUBALL^{™} contained 9.8 wt % of nanoparticles of metallic iron and iron carbide encaplsulated by graphitic carbon shells, which originate from the method of their production. Therefore, the additive comprises approximately 1 % of metallic iron. Si69 is usually described as bis(triethoxysilylpropyl)tetrasulfide (TESPT) and is widely used in industry. The SBR rubber used in this example was SBR Buna VSL 4526-2 (extended with 27.3 wt % of TDAE oil) with viscosity of 50 MU.

The additive was prepared by dissolving 30 g of SBR in 150 g of TESPT using the overhead stirrer, then adding 20 g of SWCNTs TUBALL^{™} to the solution, and dispersing the mixture by means of the three-roll mill. The ready-to-use additive is a viscous black paste, which has the viscosity ML₍₁₊₄₎ at 30 °C of 9.4 MU and volume resistivity is 0.06 Ohm·m at 25 °C.

The SBR/BR rubber was mixed using the additive by a 3 stages procedure as described in Tables 2 and 4. The amount of the additive in rubber was 9.1 phr or 3.7 wt %. Rubber sheets of 2 mm thickness were cured and volume resistivity, sheet resistivity, mechanical tensile properties, and crescent tear strength were measured. The results are summarized in Table 5. Rubber is electrically conductive, and its mechanical properties (tensile moduli, crescent tear strength) are significantly improved related to the rubber without the additive but adding just organosilane (Example 0-Si69).

### Example 2.

The additive comprises 20.0 wt % multi-walled carbon nanotubes, 54.0 wt % Si69 silane mixture and 26.0 wt % of SBR rubber. Organosilane composition and SBR rubber are the same as were used in Example 1. MWCNTs used in this example have purity of 95 %, they have 4-7 walls with mean outer diameter of 12 nm and length over 5 micrometers. The nanotubes were prepared by CO disproportionation over Co-based catalysts and comprised approximately 3.2 wt % of nanoparticles of metallic cobalt and cobalt carbide, which originate from the method of their production. Therefore, the additive comprises approximately 0.64 wt % of metallic iron.

The additive was prepared by dissolving 28.4 g of SBR in 141.6 g of TESPT using the overhead stirrer, then adding 30 g of MWCNTs to the solution, and dispersing the mixture by means of the three-roll mill.

The ready-to-use additive is a viscous black paste, which has the viscosity ML₍₁₊₄₎ at 30 °C of 14.7 MU and volume resistivity is 7.0 Ohm·m at 25 °C.

The SBR/BR rubber was mixed using the additive by a 3 stages procedure as described in Tables 2 and 4. The amount of the additive in rubber was 12.6 phr or 5.0 wt %. Rubber sheets of 2 mm thickness were cured and volume resistivity, sheet resistivity, mechanical tensile properties, and crescent tear strength were measured. The results are summarized in Table 5. Rubber is electrically conductive, and its mechanical properties (tensile moduli, crescent tear strength) are improved related to the rubber without the additive but adding just organosilane, despite the effect is not significant as with the additive comprising SWCNTs.

### Example 3.

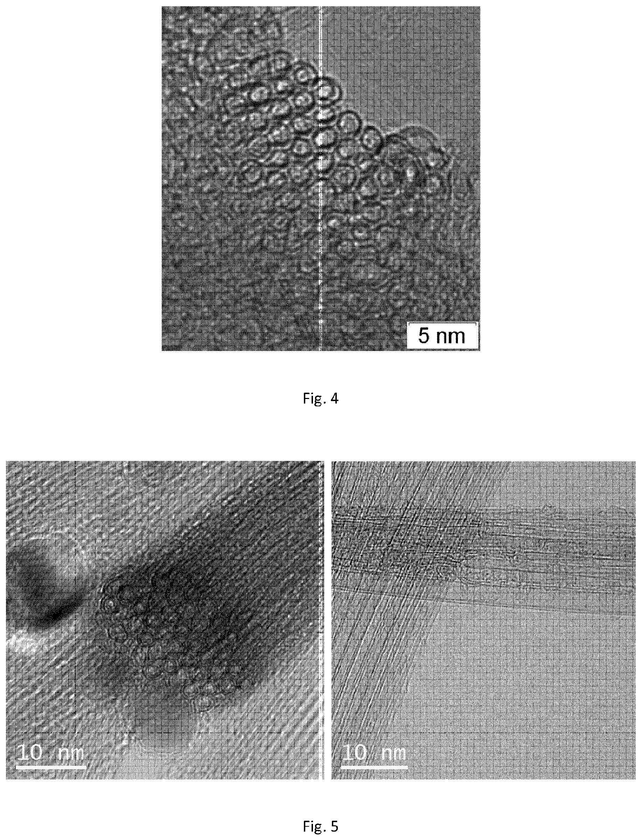

The additive comprises 15.0 wt % of the material containing mixture of single-walled carbon nanotubes and double-walled carbon nanotubes, 70.8 wt % of Si69 and 14.2 wt % of SBR rubber. Organosilane mixture and SBR rubber are the same as were used in Example 1. SWCNTs and DWCNTs used in this example have diameters more than 1.2 and less than 2.8 nm (D10 = 1,4 nm, D90 = 2,5 nm). TEM micrographs of the SWCNTs and DWCNTs mixture are shown in FIG 4. The ratio of G/D in the Raman spectrum at 532 nm is 45. BET specific surface area is 430 m²/g.

The additive was prepared by dissolving 31.4 g of SBR in 157.2 g of TESPT using the overhead stirrer, then adding 11.4 g of MWCNTs to the solution, and dispersing the mixture by means of the three-roll mill.

The ready-to-use additive is a viscous black paste, which has the viscosity ML₍₁₊₄₎ at 30 °C of 12.3 MU and volume resistivity is 1.38 Ohm·m at 25 °C.

The SBR/BR rubber was mixed using the additive by a 3 stages procedure as described in Tables 2 and 4. The amount of the additive in rubber was 9.6 phr or 3.9 wt %. Rubber sheets of 2 mm thickness were cured and volume resistivity, sheet resistivity, mechanical tensile properties, crescent tear strength, hardness and rebound resilience were measured. The results are summarized in Table 5. Rubber is electrically conductive, and its mechanical properties (tensile moduli, crescent tear strength) are significantly improved related to the rubber without the additive but adding just organosilane (Example 0-Si69).

### Example 4.

The additive is similar to that of Example 3, however 3-octanoylthio-1-propyltriethoxysilane (Momentive NXT^{™}) was used as the organosilane composition (S). SWCNTs and DWCNTs used in this example have diameters more than 1.2 and less than 3.8 nm (D10 = 1,4 nm, D90 = 3,6 nm). TEM micrographs of the SWCNTs and DWCNTs mixture are shown in FIG 5. The ratio of G/D in the Raman spectrum at 532 nm is 38. BET specific surface area is 320 m²/g.

The ready-to-use additive is a viscous black paste, which has the viscosity ML₍₁₊₄₎ at 30 °C of 12.0 MU and volume resistivity is 1.24 Ohm·m at 25 °C.

The SBR/BR rubber was mixed using the additive by a 3 stages procedure as described in Tables 2 and 4. The amount of the additive in rubber was 9.6 phr or 3.9 wt %. Rubber sheets of 2 mm thickness were cured and volume resistivity, sheet resistivity, mechanical tensile properties, crescent tear strength, hardness and rebound resilience were measured. The results are summarized in Table 5. Rubber is electrically conductive, and its mechanical properties (tensile moduli, crescent tear strength) are significantly improved related to the rubber without the additive but adding just organosilane (Example 0-NXT).

### Example 5.

The additive is similar to that of Example 4, however mercapto-thiocarboxylate silane oligomer (Momentive NXT Z 45^{™}) was used as the organosilane composition (S). SWCNTs and DWCNTs used in this example have diameters more than 1.2 and less than 3.8 nm (D10 = 1,4 nm, D90 = 3,6 nm). TEM micrographs of the SWCNTs and DWCNTs mixture are shown in FIG 5. The ratio of G/D in the Raman spectrum at 532 nm is 38. BET specific surface area is 320 m²/g.

The ready-to-use additive is a viscous black paste, which has the viscosity ML₍₁₊₄₎ at 30 °C of 12.6 MU and volume resistivity is 1.44 Ohm·m at 25 °C.

The SBR/BR rubber was mixed using the additive by a 3 stages procedure as described in Tables 2 and 4. The amount of the additive in rubber was 9.6 phr or 3.9 wt %. Rubber sheets of 2 mm thickness were cured and volume resistivity, sheet resistivity, mechanical tensile properties, crescent tear strength, hardness and rebound resilience were measured. The results are summarized in Table 5. Rubber is electrically conductive, and its mechanical properties (tensile moduli, crescent tear strength) are significantly improved related to the rubber without the additive but adding just organosilane (Examples 0-NXT and 0-Si69).

### Example 6.

The additive comprises 15.0 wt % of a mixture of multi-walled carbon nanotubes and single-walled carbon nanotubes, 70.8 wt % of 3-octanoylthio-1-propyltriethoxysilane (Momentive NXT^{™}) and 14.2 wt % of styrene-butadiene-styrene block copolymer (SBS) rubber. The mixture of MWCNTs and SWCNTs was composed by mixing 1 part of MWCNTs used in Example 2 and 2 parts of SWCNTs TUBALL^{™} used in Example 1. SBS rubber was Kumho KTR 401.

The additive was prepared by dissolving 28.4 g of SBS Kumho KTR 401 in 141.6 g of Momentive NXT^{™} silane using the overhead stirrer, then adding 30 g of the mixture of MWCNTs and SWCNTs to the solution, and dispersing the mixture by means of the three-roll mill. The ready-to-use additive is a viscous black paste, which has the viscosity ML₍₁₊₄₎ at 30 °C of 10,9 MU and volume resistivity is 4.23 Ohm·m at 25 °C.

The SBR/BR rubber was mixed using the additive by a 3 stages procedure as described in Tables 2 and 4. The amount of the additive in rubber was 9.6 phr or 3.9 wt %. Rubber sheets of 2 mm thickness were cured and volume resistivity, sheet resistivity, mechanical tensile properties, crescent tear strength, hardness and rebound resilience were measured. The results are summarized in Table 5. Rubber is electrically conductive, and its mechanical properties (tensile moduli, crescent tear strength) are significantly improved related to the rubber without the additive but adding just NXT^{™} silane (Examples 0-NXT).

### Examples 7-9.

The additive comprises 18.4 wt % of n-type doped single-walled carbon nanotubes, 67 wt % of Si69 (Examples 7 and 8) or 3-octanoylthio-1-propyltriethoxysilane (Momentive NXT^{™}) (Example 9), and 14.6 wt % of styrene-butadiene-styrene block copolymer (SBS) rubber.

In Example 7 n-Type doped SWCNTs used in this example were prepared by mixing of 40 g SWCNTs TUBALL^{™} with a mixture of 24 g of KF (potassium fluoride) salt and 36 g of PEG (polyethylene glycol). In Example 7 Na Benzoate was used instead of KF. In Example 8 K Glycinate was used instead of KF. SBS rubber was Kumho KTR 401.

The additive was prepared by dissolving 36.8 g of SBS Kumho KTR 401 in 134 g of Momentive NXT^{™} silane using the overhead stirrer, then adding 29.2 g of the n-doped SWCNTs to the solution, and dispersing the mixture by means of the three-roll mill. The ready-to-use additive is a viscous black paste, which has the viscosity ML₍₁₊₄₎ at 30 °C of 8.4 MU and volume resistivity is 0.02 Ohm·m at 25 °C (Example 7), ML₍₁₊₄₎ at 30 °C of 8.5 MU and volume resistivity is 0.03 Ohm·m at 25 °C (Example 8) and ML₍₁₊₄₎ at 30 °C of 8.2 MU and volume resistivity is 0.01 Ohm·m at 25 °C (Example 9).

The SBR/BR rubber was mixed using the additive by a 3 stages procedure as described in Tables 2 and 4. The amount of the additive in rubber was 10.2 phr or 4.1 wt %. Rubber sheets of 2 mm thickness were cured and volume resistivity, sheet resistivity, mechanical tensile properties, crescent tear strength, hardness and rebound resilience were measured. The results are summarized in Table 5.

The electrical resistivity of the SBR/BR rubber mixed with using the additive by this Example is significantly less than the electrical resistivity of the SBR/BR rubber mixed of Example 10, where the same concentration of SWCNTs was added to rubber, but nanotubes were not doped.

### Example 10

The additive comprises 8.2 wt % single-walled carbon nanotubes TUBALL^{™}, 75 wt % of 3-octanoylthio-1-propyltriethoxysilane (Momentive NXT^{™}) silane and 16.8 wt % of SBS rubber Kumho KTR 401. SWCNTs are TUBALL^{™}, same batch as used in the Example 1.

The additive was prepared by dissolving 33.6 g of SBS in 150 g of Momentive NXT^{™} silane using the overhead stirrer, then adding 16.4 g of SWCNTs TUBALL^{™} to the solution, and dispersing the mixture by means of the three-roll mill. The ready-to-use additive is a viscous black paste, which has the viscosity ML₍₁₊₄₎ at 30 °C of 6.8 MU and volume resistivity is 0.08 Ohm·m at 25 °C.

The SBR/BR rubber was mixed using the additive by a 3 stages procedure as described in Tables 2 and 4. The amount of the additive in rubber was 9.1 phr or 3.7 % wt. Rubber sheets of 2 mm thickness were cured and volume resistivity, sheet resistivity, mechanical tensile properties, crescent tear strength, hardness and rebound resilience were measured. The results are summarized in Table 5. Rubber is electrically conductive, and its mechanical properties (tensile moduli, crescent tear strength) are significantly improved related to the rubber without the additive but adding just NXT^{™} silane (Examples 0-NXT).

### Example 11

The additive comprises 8.2 wt % single-walled carbon nanotubes TUBALL^{™}, 75 wt % of mercapto-thiocarboxylate silane oligomer (Momentive NXT Z 45^{™}) and 16.8 wt % of SBS rubber Kumho KTR 401. SWCNTs are TUBALL^{™}, same batch as used in the Example 1.

The additive was prepared by dissolving 33.6 g of SBS in 150 g of Momentive NXT Z 45^{™} using the overhead stirrer, then adding 16.4 g of SWCNTs TUBALL^{™} to the solution and dispersing the mixture by means of the three-roll mill. The ready-to-use additive is a viscous black paste, which has the viscosity ML₍₁₊₄₎ at 30 °C of 7.3 MU and volume resistivity is 0.08 Ohm·m at 25 °C.

The SBR/BR rubber was mixed using the additive by a 3 stages procedure as described in Tables 2 and 4. The amount of the additive in rubber was 9.1 phr or 3.7 % wt. Rubber sheets of 2 mm thickness were cured and volume resistivity, sheet resistivity, mechanical tensile properties, crescent tear strength, hardness and rebound resilience were measured. The results are summarized in Table 5. Rubber is electrically conductive, and its mechanical properties (tensile moduli, crescent tear strength) are significantly improved related to the rubber without the additive but adding just organosilane (Examples 0-NXT and 0-Si69).

### Example 12.

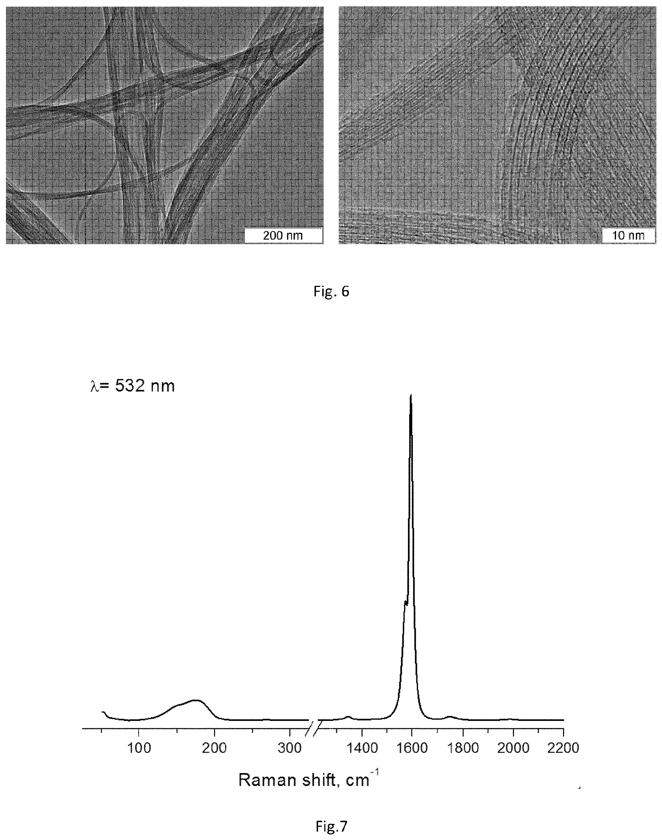

The additive comprises 11.1 wt % single-walled carbon nanotubes TUBALL^{™}, 83.9 wt % of 3-octanoylthio-1-propyltriethoxysilane (Momentive NXT^{™}) and 5.0 wt % of SBS rubber Kumho KTR 401. SWCNTs TUBALL^{™} used in this example were additionally purified and decapped to remove the caps on the ends of the nanotubes. They have purity of 99 wt %, they have mean diameter of 1.6 nm and length over 5 micrometers. TEM micrographs are shown in FIG 6, Raman spectrum at the wavelength of 532 nm is shown in FIG 7. The ratio of G/D bands in Raman spectrum at 532 nm is 104. The SWCNTs are open-ended and have BET specific surface area 1160 m²/g.

The additive was prepared by dissolving 10 g of SBS in 167.8 g of Momentive NXT^{™} silane using the overhead stirrer, then adding 22.2 g of decapped and purified SWCNTs TUBALL^{™} to the solution, and dispersing the mixture by means of the three-roll mill. The ready-to-use additive is a viscous black paste, which has the viscosity ML₍₁₊₄₎ at 30 °C of 7.6 MU and volume resistivity is 0.07 Ohm·m at 25 °C.

The SBR/BR rubber was mixed using the additive by a 3 stages procedure as described in Tables 2 and 4. The amount of the additive in rubber was 8.1 phr or 3.3 wt %. Rubber sheets of 2 mm thickness were cured and volume resistivity, sheet resistivity, mechanical tensile properties, crescent tear strength, hardness and rebound resilience were measured. The results are summarized in Table 5. Rubber is electrically conductive, and its mechanical properties (tensile moduli, crescent tear strength) are significantly improved related to the rubber without the additive but adding just organosilane (Example 0-NXT).

### Example 13.

The additive is similar to that of Example 9, however, it comprises 3.6 wt % single-walled carbon nanotubes TUBALL^{™}, 31.4 wt % of 3-octanoylthio-1-propyltriethoxysilane (Momentive NXT^{™}) and 65 wt % of SBS rubber Kumho KTR 401.

The additive was prepared by dissolving 165.3 g of SBS in 79.9 g of Momentive NXT^{™} silane using the laboratory internal rubber mixer Brabender 350S with tangential rotors configuration; then adding 9.2 g of SWCNTs TUBALL^{™} to mixer chamber and finally dispersing the mixture. Afterwards, additional treatment on two roll rubber mill LM 200/400 Zamak was applied to the mixture. The ready-to-use additive is a highly viscous black paste, which has the viscosity ML₍₁₊₄) at 30 °C of 44.3 MU and volume resistivity is 2.76 Ohm·m at 25 °C.

The SBR/BR rubber was mixed using the additive by a 3 stages procedure as described in Tables 2 and 4. The amount of the additive in rubber was 21.7 phr or 8.3 wt %. Rubber sheets of 2 mm thickness were cured and volume resistivity, sheet resistivity, mechanical tensile properties, crescent tear strength, hardness and rebound resilience were measured. The results are summarized in Table 5. Rubber is electrically conductive, and its mechanical properties (tensile moduli, crescent tear strength) are significantly improved related to the rubber without the additive but adding just organosilane (Example 0-NXT).

### Example 14.

The additive comprises 6.0 wt % single-walled carbon nanotubes TUBALL^{™}, 54 wt % of 3-octanoylthio-1-propyltriethoxysilane (Momentive NXT^{™}) and 40 wt % of SBR Buna VSL 4526-2. SWCNTs are TUBALL^{™}, same batch as used in the Example 1.

The additive was prepared the same as Example 11 by dissolving 107.5 g of SBR in 145.1 g of Momentive NXT^{™} silane and then adding 16.1 g of SWCNTs TUBALL^{™}. The ready-to-use additive is a highly viscous black paste, which has the viscosity ML₍₁₊₄₎ at 30 °C of 38.6 MU and volume resistivity is 0.33 Ohm·m at 25 °C.

The SBR/BR rubber was mixed using the additive by a 3 stages procedure as described in Tables 2 and 4. The amount of the additive in rubber was 12.6 phr or 5.1 % wt. Rubber sheets of 2 mm thickness were cured and volume resistivity, sheet resistivity, mechanical tensile properties, crescent tear strength, hardness and rebound resilience were measured. The results are summarized in Table 5. Rubber is electrically conductive, and its mechanical properties (tensile moduli, crescent tear strength) are significantly improved related to the rubber without the additive but adding just organosilane (Example 0-NXT).

### Example 15.

The additive comprises 8.3 wt % single-walled carbon nanotubes, 76.4 wt % of 3-octanoylthio-1-propyltriethoxysilane (Momentive NXT^{™}) and 15.3 wt % of SBR Buna VSL 4526-2. Before mixing to the additive, SWCNTs were mechanically milled to reduce their length and simulate low-quality SWCNTs with high concentration of defects. The ratio of G/D bands in Raman spectrum at 532 nm is 18. The SWCNTs have BET specific surface area of 320 m²/g.

The additive was prepared by dissolving 30.6 g of SBR in 152.8 g of Momentive NXT^{™} silane using the overhead stirrer, then adding 16.6 g of milled SWCNTs TUBALL^{™} dispersing the mixture by means of the three-roll mill. The ready-to-use additive is a viscous black paste, which has the viscosity ML₍₁₊₄₎ at 30 °C of 6.6 MU and volume resistivity is 0.14 Ohm·m at 25 °C.

The SBR/BR rubber was mixed using the additive by a 3 stages procedure as described in Tables 2 and 4. The amount of the additive in rubber was 8.9 phr or 3.6 % wt. Rubber sheets of 2 mm thickness were cured and volume resistivity, sheet resistivity, mechanical tensile properties, crescent tear strength, hardness and rebound resilience were measured. The results are summarized in Table 5. Rubber is electrically conductive, and its mechanical properties (tensile moduli, crescent tear strength) are significantly improved related to the rubber without the additive but adding just organosilane (Example 0-NXT).

### Example 16.

The additive comprises 10.8 wt % single-walled carbon nanotubes TUBALL^{™}, 81.7 wt % of 3-octanoylthio-1-propyltriethoxysilane (Momentive NXT^{™}) and 7.5 wt % of natural rubber. SWCNTs are TUBALL^{™}, same batch as used in the Example 1.

The additive was prepared by dissolving 15 g of natural rubber SVR-3L in 163.4 g of Momentive NXT^{™} organosilane using the overhead stirrer, then adding 21.6 g of SWCNTs TUBALL^{™} to the solution, and dispersing the mixture by means of the three-roll mill. The ready-to-use additive is a viscous black paste, which has the viscosity ML₍₁₊₄₎ at 30 °C of 12.4 MU and volume resistivity is 0.13 Ohm·m at 25 °C.

The SBR/BR rubber was mixed using the additive by a 3 stages procedure as described in Tables 2 and 4. The amount of the additive in rubber was 8.3 phr or 3.4 % wt. Rubber sheets of 2 mm thickness were cured and volume resistivity, sheet resistivity, mechanical tensile properties, crescent tear strength, hardness and rebound resilience were measured. The results are summarized in Table 5. Rubber is electrically conductive, and its mechanical properties (tensile moduli, crescent tear strength) are significantly improved related to the rubber without the additive but adding just organosilane (Example 0-NXT).

### Example 17.

The additive comprises 10 wt % single-walled carbon nanotubes TUBALL^{™}, 75 wt % of 3-octanoylthio-1-propyltriethoxysilane (Momentive NXT^{™}) and 15 wt % of high -cis 1,4-butadiene rubber. SWCNTs are TUBALL^{™}, same batch as used in the Example 1.

The additive was prepared by dissolving 30 g of Buna CB-24 in 150 g of Momentive NXT^{™} silane using the overhead stirrer, then adding 20 g of SWCNTs TUBALL^{™} to the solution, and dispersing the mixture by means of the three-roll mill. The ready-to-use additive is a viscous black paste, which has the viscosity ML₍₁₊₄₎ at 30 °C of 11.8 MU and volume resistivity is 0.10 Ohm·m at 25 °C.

The SBR/BR rubber was mixed using the additive by a 3 stages procedure as described in Tables 2 and 4. The amount of the additive in rubber was 9.1 phr or 3.7 % wt. Rubber sheets of 2 mm thickness were cured and volume resistivity, sheet resistivity, mechanical tensile properties, crescent tear strength, hardness and rebound resilience were measured. The results are summarized in Table 5. Rubber is electrically conductive, and its mechanical properties (tensile moduli, crescent tear strength) are significantly improved related to the rubber without the additive but adding just organosilane (Example 0-NXT).

**Table 1**

| Exam ple No. | CNTs | Silane | Rubber | CNT, wt % | Silane, wt % | Rubber, wt % | ML₍₁₊₄₎ 30°C, MU | Rᵥ, Ohm·m |
|---|---|---|---|---|---|---|---|---|
| 1 | SWCNT | Si69 | SBR | 10.0 | 75.0 | 15.0 | 9.4 | 0.06 |
| 2 | MWCNT | Si69 | SBR | 20.0 | 54.0 | 26.0 | 14.7 | 7.03 |
| 3 | SWCNT+ DWCNT | Si69 | SBR | 15.0 | 70.8 | 14.2 | 12.3 | 1.38 |
| 4 | SWCNT+ DWCNT | NXT | SBR | 15.0 | 70.8 | 14.2 | 12.0 | 1.24 |
| 5 | SWCNT+ DWCNT | NXT Z 45 | SBR | 15.0 | 70.8 | 14.2 | 12.6 | 1.44 |
| 6 | SWCNT+ MWCNT | NXT | SBS | 5.0 10.0 | 70.8 | 14.2 | 10.9 | 4.2 |
| 7 | n-doped SWCNT | Si69 | SBS | 18.4 | 67.0 | 14.6 | 8.4 | 0.02 |
| 8 | n-doped SWCNT | Si69 | SBS | 18.4 | 67.0 | 14.6 | 8.5 | 0.03 |
| 9 | n-doped SWCNT | NXT | SBS | 18.4 | 67.0 | 14.6 | 8.2 | 0.01 |
| 10 | SWCNT | NXT | SBS | 8.2 | 75.0 | 16.8 | 6.8 | 0.08 |
| 11 | SWCNT | NXT Z 45 | SBS | 8.2 | 75.0 | 16.8 | 7.3 | 0.08 |
| 12 | SWCNT | NXT | SBS | 11.1 | 83.9 | 5.0 | 7.6 | 0.07 |
| 13 | SWCNT | NXT | SBS | 3.6 | 31.4 | 65.0 | 44 | 2.8 |
| 14 | SWCNT | NXT | SBR | 6.0 | 54.0 | 40.0 | 39 | 0.33 |
| 15 | SWCNT | NXT | SBR | 8.3 | 76.4 | 15.3 | 6.6 | 0.14 |
| 16 | SWCNT | NXT | NR | 10.9 | 81.7 | 7.5 | 12.4 | 0.13 |
| 17 | SWCNT | NXT | BR | 10.0 | 75.0 | 15.0 | 11.8 | 0.10 |

**Table 2**

| Component | Contents, phr | |
|---|---|---|
| | Reference | With the additive |
| **1st stage** | | |
| SBR Buna VSL 4526 | 100 | 100 |
| BR CB-24 | 27 | 27 |
| Silica Zeosil 1165 MP | 85 | 85 |
| Stearic Acid | 2 | 2 |
| ZnO | - | - |
| IPPD | - | - |
| Organosilane | 6,8 | - |
| The inventive additive | - | X |
| TDAE oil | 13 | 13 |

| **2nd stage** | | |
|---|---|---|
| ZnO | 2,4 | 2,4 |
| IPPD | 3,5 | 3,5 |

| **Final stage** | | |
|---|---|---|
| TBBS | 3 | 3 |
| Sulphur | 1 | 1 |
| DPG | 1,5 | 1,5 |
| **Total:** | 245,2 | 238,4 + X |

**Table 3 - Mixing procedure for reference**

| Rotor speed, rpm | Operation | Duration,s | Mixing time, s | Total time, s |
|---|---|---|---|---|
| 1st MB stage, 80 °C | | | | |
| 10 | Add polymers | 0 | 0 | 0 |
| 50 | Ram Down Mixing (RDM) for 60 s | 60 | 60 | 60 |
| 10 | Add 1/4 Silica + 1/3 TDAE + 1/2 Organosilane + St.Acid | 40 | 60 | 100 |
| 50 | RDM for 60 s | 60 | 120 | 160 |
| 10 | Add 1/4 Silica + 1/3 TDAE + 1/2 Organosilane | 40 | 120 | 200 |
| 50 | RDM for 60 s | 60 | 180 | 260 |
| 10 | Add 1/4 Silica + 1/3 TDAE | 40 | 180 | 300 |
| 50 | RDM for 60 s | 60 | 240 | 360 |
| 10 | Add 1/4 Silica | 40 | 240 | 400 |
| 50 | RDM for 300 s | 300 | 540 | 700 |

| 2nd MB stage, 80 °C | | | | |
|---|---|---|---|---|
| 10 | Add 1/2 MB + ZnO + IPPD + 1/2 MB | 0 | 0 | 0 |
| 50 | RDM for 120 s, Discharge | 120 | 120 | 120 |

| Final stage, 60 °C | | | | |
|---|---|---|---|---|
| 10 | Add 1/2 MB + curatives + 1/2 MB. | 0 | 0 | 0 |
| 40-50 | RDM for 120 s, Discharge | 120 | 120 | 120 |

**Table 4.**

| Rotor speed, rpm | Operation | Duration, s | Mixing time, s | Total time, s |
|---|---|---|---|---|
| 1st MB stage, 80 °C | | | | |
| 10 | Add polymers | 0 | 0 | 0 |
| 50 | Ram Down Mixing (RDM) for 60 s | 60 | 60 | 60 |
| 10 | Add invented additive | 20 | 60 | 80 |
| 50 | RDM for 60 s | 60 | 120 | 140 |
| 10 | Add 1/4 Silica+1/3 TDAE+1/2 Organosilane + St.Acid | 40 | 120 | 180 |
| 50 | RDM for 60 s | 60 | 180 | 240 |
| 10 | Add 1/4 Silica + 1/3 TDAE + 1/2 Organosilane | 40 | 180 | 280 |
| 50 | RDM for 60 s | 60 | 240 | 340 |
| 10 | Add 1/4 Silica + 1/3 TDAE | 40 | 240 | 380 |
| 50 | RDM for 60 s | 60 | 300 | 440 |
| 10 | Add 1/4 Silica | 40 | 300 | 480 |
| 50 | RDM for 120 s | 120 | 420 | 600 |

| 2nd MB stage, 80 °C | | | | |
|---|---|---|---|---|
| 10 | Add 1/2 MB + ZnO + IPPD + 1/2 MB. | 0 | 0 | 0 |
| 50 | RDM for 120 s, Discharge | 120 | 120 | 120 |

| Final stage, 60 °C | | | | |
|---|---|---|---|---|
| 10 | Add 1/2 MB + curatives + 1/2 MB. | 0 | 0 | 0 |
| 40-50 | RDM for 120 s, Discharge | 120 | 120 | 120 |

**Table 5.**

| Example | Additive, % | CNT, % | 1g(Rᵥ) | 1g(Rₛ) | M100 | M300 | TS | EB | CT | H | RR |
|---|---|---|---|---|---|---|---|---|---|---|---|
| 0-Si69 | 0 | 0 | - | - | 2.6 | 13.1 | 18.1 | 374 | 31 | 66 | 29 |
| 0-NXT | 0 | 0 | - | - | 1.9 | 8.1 | 21.0 | 590 | 42 | 61 | 33 |
| 1 | 3.7 | 0.37 | 2.1 | 7.5 | 4.4 | 15.8 | 18.9 | 345 | 37 | 68 | 28 |
| 2 | 5.0 | 1.00 | 4.1 | 9.3 | 3.8 | 16.1 | 19.3 | 347 | 34 | 74 | 28 |
| 3 | 3.9 | 0.58 | 3.8 | 8.5 | 4.0 | 16.1 | 19.6 | 348 | 33 | 73 | 28 |
| 4 | 3.9 | 0.58 | 3.6 | 8.2 | 2.8 | 9.3 | 17.5 | 476 | 43 | 71 | 29 |
| 5 | 3.9 | 0.58 | 3.6 | 8.3 | 3.9 | 15.2 | 17.3 | 394 | 44 | 73 | 28 |
| 6 | 3.9 | 0.58 | 3.8 | 8.9 | 2.5 | 8.8 | 18.5 | 523 | 44 | 72 | 29 |
| 7 | 4.1 | 0.30 | 2.3 | 6.5 | 5.2 | 15.1 | 18.7 | 364 | 53 | 79 | 27 |
| 8 | 4.1 | 0.30 | 1.6 | 6.1 | 4.1 | 16.2 | 18.4 | 330 | 38 | 67 | 31 |
| 9 | 4.1 | 0.30 | 1.0 | 5.7 | 3.7 | 9.3 | 20.7 | 595 | 57 | 73 | 28 |
| 10 | 3.7 | 0.30 | 2.3 | 7.3 | 3.1 | 9.0 | 17.4 | 503 | 51 | 64 | 29 |
| 11 | 3.7 | 0.30 | 2.4 | 7.2 | 4.1 | 15.0 | 17.0 | 403 | 41 | 66 | 30 |
| 12 | 3.3 | 0.37 | 1.9 | 6.4 | 3.5 | 9.7 | 19.4 | 533 | 61 | 71 | 27 |
| 13 | 8.3 | 0.30 | 3.6 | 8.4 | 2.9 | 7.9 | 20.9 | 649 | 48 | 70 | 31 |
| 14 | 5.1 | 0.30 | 2.6 | 7.1 | 3.5 | 8.8 | 19.7 | 582 | 53 | 71 | 28 |
| 15 | 3.6 | 0.30 | 2.9 | 7.5 | 3.5 | 9.8 | 19.6 | 516 | 49 | 62 | 30 |
| 16 | 3.4 | 0.37 | 1.7 | 6.7 | 2.8 | 8.5 | 18.1 | 526 | 55 | 64 | 29 |
| 17 | 3.7 | 0.37 | 2.2 | 7.2 | 3.5 | 9.4 | 18.4 | 509 | 53 | 66 | 31 |

## Claims

1. An additive to silica-filled rubber composition increasing electrical conductivity and physical-mechanical properties of rubber comprising:
1-20 wt % carbon nanotubes,
20-90 wt % of organosilane composition (S),
and 5-70 wt % of organic rubber (R) soluble in organosilane composition (S).

2. The additive of claim 1, wherein at least 25 wt % of carbon nanotubes are single-walled and/or double-walled carbon nanotubes.

3. The additive of claim 2, wherein the ratio of the intensities of G/D lines in Raman spectrum of carbon nanotubes at 532 nm is more than 10.

4. The additive of claim 2, wherein the single-walled carbon nanotubes and/or double-walled carbon nanotubes are n-type doped carbon nanotubes or p-type doped carbon nanotubes.

5. The additive of claim 1, wherein the additive contains particles of one or more Group 8-11 metals of the Periodic Table or their alloys.

6. The additive of claim 1, wherein the organosilane composition (S) comprises an alkyl silane and/or one or more of sulfur-containing organosilanes: acylthioalkylsilane, mercaptosilane, disulfide silane, or polysulfide silane.

7. The additive of claim 1, wherein the organosilane composition (S) comprises one or more disulfide or polysulfide compounds, which have a structural formula
X¹X²X³Si-R¹-S*a*-R¹-SiX¹X²X³,
wherein R¹ is a linear or branched alkylene group of from 1 to 6 carbon atoms; X¹ is an -OR² group, where R² is an alkyl group of from 1 to 4 carbon atoms, or X¹ is an -OR³OH group, where R³ is a linear or branched alkylene group of from 2 to 8 carbon atoms; each occurrence of X² and X³ is independently X¹ or methyl and when X¹ and X² are -OR², then the two -OR² may be bonded together through a covalent bond to form a -OR²-R²O- group bonded to the same silicon atom which forms a ring structure containing 2 to 8 carbon atoms, two oxygen atoms and a silicon atom; and *a* is an integer from 2 to 8.

8. The additive of claim 1, wherein the organosilane composition (S) comprises one or more compounds which have structural formula
X¹X²X³Si-R¹-S-C(=O)-R⁴,
wherein R¹ is a linear or branched alkylene group of from 1 to 6 carbon atoms; X¹ is an -OR² group, where R² is an alkyl group of from 1 to 4 carbon atoms, or X¹ is an -OR³OH group, where R³ is a linear or branched alkylene group of from 2 to 8 carbon atoms; each occurrence of X² and X³ is independently X¹ or methyl and when X¹ and X² are -OR², then the two -OR² may be bonded together through a covalent bond to form a -OR²-R²O- group bonded to the same silicon atom which forms a ring structure containing 2 to 8 carbon atoms, two oxygen atoms and a silicon atom; and R⁴ is a linear or branched alkyl group of from 1 to 18 carbon atoms.

9. The additive of claim 1, wherein the organosilane composition (S) comprises one or more oligomers with a formula
X¹Silyl¹-O-{R⁵-O-Silyl²-}*_{b}*X¹,
wherein Silyl¹ and each occurrence of Silyl² is independently one of bivalent silyls: mercaptoalkylsilyl X²Si-(R¹-SH) or acylthioalkylsilyl X²Si-R¹-S-C(=O)-R⁴; where each occurrence of R¹ is independently a linear or a branched alkylene group of from 1 to 6 carbon atoms;
X¹ and each occurrence of X² are independently an -OR² group, where each occurrence of R² is independently an alkyl group of from 1 to 4 carbon atoms or an -OR³OH group, where each occurrence of R³ is independently a linear or branched alkylene group of from 2 to 8 carbon atom and when X¹ and X² are -OR², then the two -OR² may be bonded together through a covalent bond to form a -OR²-R²O- group bonded to the same silicon atom which forms a ring structure containing 2 to 8 carbon atoms, two oxygen atoms and a silicon atom;
each occurrence of R⁴ is independently a linear or branched alkyl group of from 1 to 18 carbon atoms;
each occurrence of R⁵ is independently a linear or branched alkylene group of from 1 to 18 carbon atoms;
and b is an integer from 1 to 8.

10. The additive of claim 1, wherein the organosilane composition (S) comprises one or more compounds which have structural formula
X^{l}X²X³Si-R¹-S-H
wherein R¹ is a linear or branched alkylene group of from 1 to 6 carbon atoms; X¹ is an -OR² group, where R² is an alkyl group of from 1 to 4 carbon atoms, or X¹ is an -OR³OH group, where R³ is a linear or branched alkylene group of from 2 to 8 carbon atoms or X¹ is an -OR⁶(OR⁷)_{c}OR⁸, wherein R⁶ is a straight chain alkylene group of from 2 to 6 carbon atoms or a branched chain alkylene group of from 3 to 6 carbon atoms, each R⁷ is independently an alkylene group of from 2 to 4 carbon atoms and R⁸ is a straight chain alkyl group of from 1 to 16 carbon atoms or a branched chain alkyl group of from 3 to 16 carbon atoms and c is an integer from 1 to 20; each occurrence of X² and X³ is independently X¹ or methyl, and when X¹ and X² are -OR², then the two -OR² may be bonded together through a covalent bond to form a -OR²-R²O- group bonded to the same silicon atom which forms a ring structure containing 2 to 8 carbon atoms, two oxygen atoms and a silicon atom.

11. The additive of claim 1, wherein the organosilane composition (S) comprises one or more compounds which have structural formula
X¹X²X³Si-R⁴
wherein R⁴ is a linear or branched alkyl group of from 1 to 18 carbon atoms; X¹ is an - OR² group, where R² is an alkyl group of from 1 to 4 carbon atoms, or X¹ is an -OR³OH group, where R³ is a linear or branched alkylene group of from 2 to 8 carbon atoms; each occurrence of X² and X³ is independently X¹ or methyl, and when X¹ and X² are -OR², then the two -OR² may be bonded together through a covalent bond to form a -OR²-R²O- group bonded to the same silicon atom which forms a ring structure containing 2 to 8 carbon atoms, two oxygen atoms and a silicon atom.

12. The additive of claim 1, wherein the organic rubber (R) is an organic rubber selected from a group: natural or synthetic isoprene rubbers, styrene-butadiene rubbers, poly-(styrene-butadiene-styrene) block copolymers, nitrile butadiene rubbers, hydrogenated nitrile butadiene rubbers, butadiene rubbers, butyl rubbers, halobutyl rubbers, ethylene-propylene rubbers, ethylene-propylene-diene rubbers, propylene oxide rubbers, acrylate rubbers, carboxylate rubbers, chloroprene rubbers, fluororubbers, polysulfide rubbers, epichlorohydrin rubbers, urethane rubbers, chlorosulfonated rubbers or is a mixture of two or more of these rubbers.

13. The additive of claim 1, wherein the organic rubber (R) has a Mooney viscosity ML₍₁₊₄₎ at 100 °C of not less than 20 MU.

14. The additive of claim 1, wherein the additive has volume resistivity of less than 2 Ohm·m at 25 °C or/and a Mooney viscosity ML₍₁₊₄₎ at 30 °C of not less than 5 MU and not more than 70 MU.

15. The method to produce the additive by claim 1 comprising:
(1) dissolving the organic rubber (R) in the organosilane composition (S) to form a solution and
(2) dispersing the carbon nanotubes in the solution obtained at stage (1).

16. The method according to claim 15, further comprising wetting and premixing the carbon nanotubes in the organosilane composition (S) or in one of the components of the organosilane composition (S) or in a solution of the organic rubber (R) in the organosilane composition (S).

## Patentansprüche

1. Zusatzstoff zu einer mit Siliciumdioxid gefüllten Kautschukzusammensetzung, der eine elektrische Leitfähigkeit und physikalischmechanische Eigenschaften von Kautschuk erhöht, umfassend
1-20 Gew.-% Kohlenstoffnanoröhren,
20-90 Gew.-% einer Organosilanzusammensetzung (S)
und 5-70 Gew.-% organischer Kautschuk (R), der in einer Organosilanzusammensetzung (S) löslich ist.

2. Zusatzstoff nach Anspruch 1, wobei mindestens 25 Gew.-% Kohlenstoffnanoröhren einwandige und/oder doppelwandige Kohlenstoffnanoröhren sind.

3. Zusatzstoff nach Anspruch 2, wobei das Verhältnis der Intensitäten von G/D-Banden im Raman-Spektrum von Kohlenstoffnanoröhren bei 532 nm mehr als 10 beträgt.

4. Zusatzstoff nach Anspruch 2, wobei die einwandigen Kohlenstoffnanoröhren und/oder die doppelwandigen Kohlenstoffnanoröhren n-Typ dotierte Kohlenstoffnanoröhren oder p-Typ dotierte Kohlenstoffnanoröhren sind.

5. Zusatzstoff nach Anspruch 1, wobei der Zusatzstoff Teilchen von einem oder mehreren Metallen der Gruppen 8-11 des Periodensystems oder deren Legierungen enthält.

6. Zusatzstoff nach Anspruch 1, wobei die Organosilanzusammensetzung (S) ein Alkylsilan und/oder ein oder mehrere schwefelhaltige Organosilane umfasst: Acylthioalkylsilan, Mercaptosilan, Disulfidsilan oder Polysulfidsilan.

7. Zusatzstoff nach Anspruch 1, wobei die Organosilanzusammensetzung (S) eine oder mehrere Disulfid- oder Polysulfidverbindungen umfasst, die folgende Strukturformel aufweisen:
X¹X²X³Si-R¹-Sₐ-R¹-SiX¹X²X³,
wobei R¹ eine lineare oder verzweigte Alkylengruppe mit 1 bis 6 Kohlenstoffatomen ist; X¹ eine -OR²-Gruppe ist, in der R² eine Alkylgruppe mit 1 bis 4 Kohlenstoffatomen ist, oder X¹ eine -OR³OH-Gruppe ist, in der R³ eine lineare oder verzweigte Alkylengruppe mit 2 bis 8 Kohlenstoffatomen ist; jedes Auftreten von X² und X³ unabhängig X¹ oder Methyl ist und wenn X¹ und X² -OR² sind, die zwei -OR² durch eine kovalente Bindung aneinander gebunden sein können, um eine an dasselbe Siliziumatom gebundene - OR²-R²O--Gruppe auszubilden, die eine Ringstruktur ausbildet, die 2 bis 8 Kohlenstoffatome, zwei Sauerstoffatome und ein Siliziumatom enthält; und a eine ganze Zahl von 2 bis 8 ist.

8. Zusatzstoff nach Anspruch 1, wobei die Organosilanzusammensetzung (S) eine oder mehrere Verbindungen umfasst, die folgende Strukturformel aufweisen:
X¹X²X³Si-R¹-S-C(=O)-R⁴,
wobei R¹ eine lineare oder verzweigte Alkylengruppe mit 1 bis 6 Kohlenstoffatomen ist; X¹ eine -OR²-Gruppe ist, in der R² eine Alkylgruppe mit 1 bis 4 Kohlenstoffatomen ist, oder X¹ eine -OR³OH-Gruppe ist, in der R³ eine lineare oder verzweigte Alkylengruppe mit 2 bis 8 Kohlenstoffatomen ist; wobei jedes Auftreten von X² und X³ unabhängig X¹ oder Methyl ist und wenn X¹ und X² -OR² sind, die zwei -OR² durch eine kovalente Bindung aneinander gebunden sein können, um eine an dasselbe Siliziumatom gebundene -OR²-R²O--Gruppe auszubilden, die eine Ringstruktur ausbildet, die 2 bis 8 Kohlenstoffatome, zwei Sauerstoffatome und ein Siliziumatom enthält; und R⁴ eine lineare oder verzweigte Alkylgruppe mit 1 bis 18 Kohlenstoffatomen ist.

9. Zusatzstoff nach Anspruch 1, wobei die Organosilanzusammensetzung (S) ein oder mehrere Oligomere mit folgender Formel umfasst:
X¹Silyl¹-O-{R⁵-O-Silyl²-}*_{b}*X¹,
wobei Silyl¹ und jedes Auftreten von Silyl² unabhängig eines von bivalenten Silylen sind: Mercaptoalkylsilyl X²Si-(R¹-SH) oder Acylthioalkylsilyl X²Si-R¹-S-C(=O)-R⁴; wobei jedes Auftreten von R¹ unabhängig eine lineare oder verzweigte Alkylengruppe mit 1 bis 6 Kohlenwasserstoffatomen ist;
X¹ und jedes Auftreten von X² unabhängig eine -OR²-Gruppe sind, in der jedes Auftreten von R² unabhängig eine Alkylgruppe mit 1 bis 4 Kohlenstoffatomen oder eine -OR³OH-Gruppe ist, in der jedes Auftreten von R³ unabhängig eine lineare oder verzweigte Alkylengruppe mit 2 bis 8 Kohlenstoffatomen ist, wenn X¹ und X² -OR² sind, die zwei -OR² durch eine kovalente Bindung aneinander gebunden sein können, um eine an dasselbe Siliziumatom gebundene -OR²-R²O--Gruppe auszubilden, die eine Ringstruktur ausbildet, die 2 bis 8 Kohlenstoffatome, zwei Sauerstoffatome und ein Siliziumatom enthält;
jedes Auftreten von R⁴ unabhängig eine lineare oder verzweigte Alkylgruppe mit 1 bis 18 Kohlenstoffatomen ist;
jedes Auftreten von R⁵ unabhängig eine lineare oder verzweigte Alkylengruppe mit 1 bis 18 Kohlenstoffatomen ist;
und b eine ganze Zahl von 1 bis 8 ist.

10. Zusatzstoff nach Anspruch 1, wobei die Organosilanzusammensetzung (S) eine oder mehrere Verbindungen umfasst, die folgende Strukturformel aufweisen:
X¹X²X³Si-R¹-S-H
wobei R¹ eine lineare oder verzweigte Alkylengruppe mit 1 bis 6 Kohlenstoffatomen ist; X¹ eine -OR²-Gruppe ist, in der R² eine Alkylgruppe mit 1 bis 4 Kohlenstoffatomen ist, oder X¹ eine -OR³OH-Gruppe ist, in der R³ eine lineare oder verzweigte Alkylengruppe mit 2 bis 8 Kohlenstoffatomen ist, oder X¹ ein -OR⁶(OR⁷)_{C}OR⁸ ist, wobei R⁶ eine geradkettige Alkylengruppe mit 2 bis 6 Kohlenstoffatomen oder eine verzweigtkettige Alkylengruppe mit 3 bis 6 Kohlenstoffatomen ist, jedes R⁷ unabhängig eine Alkylengruppe mit 2 bis 4 Kohlenstoffatomen ist und R⁸ eine geradkettige Alkylgruppe mit 1 bis 16 Kohlenstoffatomen oder eine verzweigtkettige Alkylgruppe mit 3 bis 16 Kohlenstoffatomen ist und c eine ganze Zahl von 1 bis 20 ist; jedes Auftreten von X² und X³ unabhängig X¹ oder Methyl ist, und wenn X¹ und X² -OR² sind, die zwei -OR² durch eine kovalente Bindung aneinander gebunden sein können, um eine an dasselbe Siliziumatom gebundene -OR²-R²O--Gruppe auszubilden, die eine Ringstruktur ausbildet, die 2 bis 8 Kohlenstoffatome, zwei Sauerstoffatome und ein Siliziumatom enthält.

11. Zusatzstoff nach Anspruch 1, wobei die Organosilanzusammensetzung (S) eine oder mehrere Verbindungen umfasst, die folgende Strukturformel aufweisen:
X¹X²X³Si-R⁴
wobei R⁴ eine lineare oder verzweigte Alkylgruppe mit 1 bis 18 Kohlenstoffatomen ist; X¹ eine -OR²-Gruppe ist, in der R² eine Alkylgruppe mit 1 bis 4 Kohlenstoffatomen ist, oder X¹ eine -OR³OH-Gruppe ist, in der R³ eine lineare oder verzweigte Alkylengruppe mit 2 bis 8 Kohlenstoffatomen ist, jedes Auftreten von X² und X³ unabhängig X¹ oder Methyl ist, und wenn X¹ und X² -OR² sind, die zwei -OR² durch eine kovalente Bindung aneinander gebunden sein können, um eine an dasselbe Siliziumatom gebundene -OR²-R²O--Gruppe auszubilden, die eine Ringstruktur ausbildet, die 2 bis 8 Kohlenstoffatome, zwei Sauerstoffatome und ein Siliziumatom enthält.

12. Zusatzstoff nach Anspruch 1, wobei das organisch Kautschuk (R) ein organisches Kautschuk ist, das ausgewählt ist aus folgender Gruppe: natürliche oder synthetische Isopren-Kautschuke, Styrol-Butadien-Kautschuke, Poly-(Styrol-Butadien-Styrol)-Blockcopolymere, Nitril-Butadien-Kautschuke, hydrierte Nitril-Butadien-Kautschuke, Butadien-Kautschuke, Butyl-Kautschuke, Halobutyl-Kautschuke, Ethylen-Propylen-Kautschuke, Ethylen-Propylen-Dien-Kautschuke, Propylen-Oxid-Kautschuke, Acrylat-Kautschuke, Carboxylat-Kautschuke, Chloropren-Kautschuke, FluorKautschuke, Polysulfid-Kautschuke, Epichlorhydrin-Kautschuke, Urethan-Kautschuke, chlorsulfonierte Kautschuke oder eine Mischung von zwei oder mehreren dieser Kautschuke ist.

13. Zusatzstoff nach Anspruch 1, wobei der organische Kautschuk (R) eine Mooney-Viskosität ML₍₁₊₄₎ bei 100 °C von nicht weniger als 20 MU aufweist.

14. Zusatzstoff nach Anspruch 1, wobei der Zusatzstoff einen Volumenwiderstand von weniger als 2 Ohm·m bei 25 °C oder/und eine Mooney-Viskosität ML₍₁₊₄₎ bei 30 °C von nicht weniger als 5 MU und nicht mehr als 70 MU aufweist.

15. Verfahren zum Herstellen des Zusatzstoffs von Anspruch 1, umfassend:
(1) Auflösen des organischen Kautschuks (R) in der Organosilanzusammensetzung (S), um eine Lösung auszubilden, und (2) Dispergieren der Kohlenstoffnanoröhren in der in Stufe (1) erhaltenen Lösung.

16. Verfahren gemäß Anspruch 15, ferner umfassend Befeuchten und Vormischen der Kohlenstoffnanoröhren in der Organosilanzusammensetzung (S) oder in einer der Komponenten der Organosilanzusammensetzung (S) oder in einer Lösung des organischen Kautschuks (R) in der Organosilanzusammensetzung (S).

## Revendications

1. Additif pour composition de caoutchouc chargé de silice augmentant la conductivité électrique et les propriétés physico-mécaniques du caoutchouc, comprenant :
1 à 20 % en poids de nanotubes de carbone,
20 à 90 % en poids de composition d'organosilane (S),
et 5 à 70 % en poids de caoutchouc organique (R) soluble dans la composition d'organosilane (S).

2. Additif selon la revendication 1, dans lequel au moins 25 % en poids de nanotubes de carbone sont des nanotubes de carbone à simple paroi et/ou à double paroi.

3. Additif selon la revendication 2, dans lequel le rapport des intensités des raies G/D dans le spectre Raman des nanotubes de carbone à 532 nm est supérieur à 10.

4. Additif selon la revendication 2, dans lequel les nanotubes de carbone à simple paroi et/ou les nanotubes de carbone à double paroi sont des nanotubes de carbone dopés de type n ou des nanotubes de carbone dopés de type p.

5. Additif selon la revendication 1, dans lequel l'additif contient des particules d'un ou plusieurs métaux des groupes 8 à 11 du tableau périodique ou de leurs alliages.

6. Additif selon la revendication 1, dans lequel la composition d'organosilane (S) comprend un alkylsilane et/ou un ou plusieurs organosilanes contenant du soufre : acylthioalkylsilane, mercaptosilane, disulfure silane ou polysulfure silane.

7. Additif selon la revendication 1, dans lequel la composition d'organosilane (S) comprend un ou plusieurs composés disulfures ou polysulfures, qui ont une formule structurale
X¹X²X³Si-R¹-Sₐ-R¹-SiX¹X²X³,
dans laquelle R¹ est un groupe alkylène linéaire ou ramifié de 1 à 6 atomes de carbone ; X¹ est un groupe -OR², où R² est un groupe alkyle de 1 à 4 atomes de carbone, ou X¹ est un groupe -OR³OH, où R³ est un groupe alkylène linéaire ou ramifié de 2 à 8 atomes de carbone ; chaque occurrence de X² et X³ est indépendamment X¹ ou méthyle et lorsque X¹ et X² sont -OR², alors les deux -OR² peuvent être liés ensemble par une liaison covalente pour former un groupe -OR²-R²O- lié au même atome de silicium qui forme une structure cyclique contenant 2 à 8 atomes de carbone, deux atomes d'oxygène et un atome de silicium ; et a est un entier de 2 à 8.

8. Additif selon la revendication 1, dans lequel la composition d'organosilane (S) comprend un ou plusieurs composés qui ont la formule structurale
X¹X²X³Si-R¹-S-C(=O)-R⁴,
dans laquelle R¹ est un groupe alkylène linéaire ou ramifié de 1 à 6 atomes de carbone ; X¹ est un groupe -OR², où R² est un groupe alkyle de 1 à 4 atomes de carbone, ou X¹ est un groupe -OR³OH, où R³ est un groupe alkylène linéaire ou ramifié de 2 à 8 atomes de carbone ; chaque occurrence de X² et X³ est indépendamment X¹ ou méthyle et lorsque X¹ et X² sont -OR², alors les deux -OR² peuvent être liés ensemble par une liaison covalente pour former un groupe -OR²-R²O- lié au même atome de silicium qui forme une structure cyclique contenant 2 à 8 atomes de carbone, deux atomes d'oxygène et un atome de silicium ; et R⁴ est un groupe alkyle linéaire ou ramifié de 1 à 18 atomes de carbone.

9. Additif selon la revendication 1, dans lequel la composition d'organosilane (S) comprend un ou plusieurs oligomères avec une formule
X¹Silyle¹-O-{R⁵-O-Silyle²-}*_{b}*X¹,
dans laquelle Silyle¹ et chaque occurrence de Silyle² sont indépendamment l'un de silyles bivalents : mercaptoalkylsilyle X²Si-(R¹-SH) ou acylthioalkylsilyle X²Si-R¹-S-C(=O)-R⁴ ; où chaque occurrence de R¹ est indépendamment un groupe alkylène linéaire ou ramifié de 1 à 6 atomes de carbone ;
X¹ et chaque occurrence de X² sont indépendamment un groupe -OR², où chaque occurrence de R² est indépendamment un groupe alkyle de 1 à 4 atomes de carbone ou un groupe -OR³OH, où chaque occurrence de R³ est indépendamment un groupe alkylène linéaire ou ramifié de 2 à 8 atomes de carbone et lorsque X¹ et X² sont -OR², alors les deux -OR² peuvent être liés ensemble par une liaison covalente pour former un groupe -OR²-R²O- lié au même atome de silicium qui forme une structure cyclique contenant 2 à 8 atomes de carbone, deux atomes d'oxygène et un atome de silicium ;
chaque occurrence de R⁴ est indépendamment un groupe alkyle linéaire ou ramifié de 1 à 18 atomes de carbone ;
chaque occurrence de R⁵ est indépendamment un groupe alkylène linéaire ou ramifié de 1 à 18 atomes de carbone ;
et *b* est un entier de 1 à 8.

10. Additif selon la revendication 1, dans lequel la composition d'organosilane (S) comprend un ou plusieurs composés qui ont la formule structurale
X¹X²X³Si-R¹-S-H
dans laquelle R¹ est un groupe alkylène linéaire ou ramifié de 1 à 6 atomes de carbone ; X¹ est un groupe -OR², où R² est un groupe alkyle de 1 à 4 atomes de carbone, ou X¹ est un groupe -OR³OH, où R³ est un groupe alkylène linéaire ou ramifié de 2 à 8 atomes de carbone ou X¹ est un groupe -OR⁶(OR⁷)_{C}OR^{B}, dans lequel R⁶ est un groupe alkylène à chaîne droite de 2 à 6 atomes de carbone ou un groupe alkylène à chaîne ramifiée de 3 à 6 atomes de carbone, chaque R⁷ est indépendamment un groupe alkylène de 2 à 4 atomes de carbone et R⁸ est un groupe alkyle à chaîne droite de 1 à 16 atomes de carbone ou un groupe alkyle à chaîne ramifiée de 3 à 16 atomes de carbone et c est un entier de 1 à 20 ; chaque occurrence de X² et X³ est indépendamment X¹ ou méthyle, et lorsque X¹ et X² sont -OR², alors les deux -OR² peuvent être liés ensemble par une liaison covalente pour former un groupe -OR²-R²O- lié au même atome de silicium qui forme une structure cyclique contenant 2 à 8 atomes de carbone, deux atomes d'oxygène et un atome de silicium.

11. Additif selon la revendication 1, dans lequel la composition d'organosilane (S) comprend un ou plusieurs composés qui ont la formule structurale
X¹X²X³Si-R⁴
dans laquelle R⁴ est un groupe alkyle linéaire ou ramifié de 1 à 18 atomes de carbone ; X¹ est un groupe -OR², où R² est un groupe alkyle de 1 à 4 atomes de carbone, ou X¹ est un groupe -OR³OH, où R³ est un groupe alkylène linéaire ou ramifié de 2 à 8 atomes de carbone ; chaque occurrence de X² et X³ est indépendamment X¹ ou méthyle et lorsque X¹ et X² sont -OR², alors les deux -OR² peuvent être liés ensemble par une liaison covalente pour former un groupe -OR²-R²O- lié au même **atome de silicium** qui forme une structure cyclique contenant 2 à 8 atomes de carbone, deux atomes d'oxygène et un atome de silicium.

12. Additif selon la revendication 1, dans lequel le caoutchouc organique (R) est un caoutchouc organique choisi à partir d'un groupe : caoutchoucs isoprène naturels ou synthétiques, caoutchoucs styrène-butadiène, copolymères séquencés poly(styrène-butadiène-styrène), caoutchoucs nitrile butadiène, caoutchoucs nitrile butadiène hydrogénés, caoutchoucs butadiène, caoutchoucs butyle, caoutchoucs halobutyle, caoutchoucs éthylène-propylène, caoutchoucs éthylène-propylène-diène, caoutchoucs oxyde de propylène, caoutchoucs acrylate, caoutchoucs carboxylate, caoutchoucs chloroprène, caoutchoucs fluorés, caoutchoucs polysulfure, caoutchoucs épichlorhydrine, caoutchoucs uréthane, caoutchoucs chlorosulfonés ou un mélange de deux ou plus de ces caoutchoucs.

13. Additif selon la revendication 1, dans lequel le caoutchouc organique (R) a une viscosité Mooney ML₍₁₊₄₎ à 100 °C d'au moins 20 MU.

14. Additif selon la revendication 1, dans lequel l'additif a une résistivité volumique de moins de 2 Ohm m à 25 °C ou/et une viscosité Mooney ML₍₁₊₄₎ à 30 °C d'au moins 5 MU et d'au plus 70 MU.

15. Procédé pour produire l'additif selon la revendication 1 comprenant :
(1) la dissolution du caoutchouc organique (R) dans la composition d'organosilane (S) pour former une solution et (2) la dispersion des nanotubes de carbone dans la solution obtenue à l'étape (1).

16. Procédé selon la revendication 15, comprenant en outre le mouillage et le prémélange des nanotubes de carbone dans la composition d'organosilane (S) ou dans l'un des composants de la composition d'organosilane (S) ou dans une solution du caoutchouc organique (R) dans la composition d'organosilane (S).
